# EUROPÄISCHE PATENTSCHRIFT

(11) **EP 2 045 909 B1**
(45) Veröffentlichungstag und Bekanntmachung des Hinweises auf die Patenterteilung: **28.10.2020**
(21) Anmeldenummer: 08400042.1
(22) Anmeldetag: 25.09.2008
(51) Int. Cl.: H02P 7/298

(54) **Hand-Werkzeug**
Hand tool
Outil manuel

(30) Priorität: 02.10.2007 DE 102007048631
(43) Veröffentlichungstag der Anmeldung: 08.04.2009
(73) Patentinhaber: Festool GmbH, 73240 Wendlingen am Neckar (DE)
(72) Erfinder: Maier, Frank, 72622 Nürtingen (DE)
(74) Vertreter: Patentanwälte Bregenzer und Reule Partnerschaftsgesellschaft mbB

(56) Entgegenhaltungen:
- DE-A1-102005 006 358
- DE-U1- 20 210 567
- US-A- 4 716 409
- US-A- 5 493 267

## Beschreibung

Die Erfindung betrifft ein elektrisches Hand-Werkzeug mit einem Antriebsmotor zum Antreiben eines Werkzeugs.

Ein derartiges Hand-Werkzeug ist z.B. in DE 202 10 567 U1 erläutert.

Bei elektrischen Hand-Werkzeugen, beispielsweise Bohrmaschinen, Schleifgeräten und dergleichen, ist in einem jeweiligen Gehäuse der Hand-Werkzeugmaschine ein Antriebsmotor mit einer Ansteuereinrichtung, beispielsweise einer Phasenanschnittssteuerung, einer elektronischen Kommutiereinheit oder dergleichen, sowie eine Bedieneinrichtung angeordnet. Die Bedieneinrichtung umfasst in der Regel eine Vorgabeeinrichtung, zum Beispiel ein Potentiometer, an dem der Bediener die gewünschte Drehzahl des Antriebsmotors oder sonstige Antriebsparameter einstellen kann, zum Beispiel ein Abschaltdrehmoment. Die Vorgabeeinrichtung erzeugt Vorgabewerte, die von der Ansteuereinrichtung zur elektrischen Ansteuerung des Antriebsmotors ausgewertet werden.

Zur Übertragung der Vorgabewerte von der Vorgabeeinrichtung zu der Ansteuereinrichtung ist eine Signalleitung vorgesehen. Zudem benötigt der elektrische Antriebsmotor elektrische Versorgungsleitungen zur elektrischen Stromversorgung.

Wenn zwischen einerseits der Bedieneinrichtung und andererseits der Ansteuereinrichtung und dem Antriebsmotor, der in der Regel nahe beim angetriebenen Werkzeug angeordnet ist, eine größere Distanz zu überbrücken ist, sind längere Kabelstrecken zu überwinden und es kann zu Störungen auf der Signalleitung kommen. Eventuell sind sogar Steckverbindungen in den Verbindungswegen vorhanden. Wenn der Antriebsmotor beispielsweise ein Reihenschlussmotor ist, erzeugt er in seiner Umgebung nicht unerhebliche Störungen. Eine Signalleitung zwischen der Bedieneinrichtung und der Ansteuereinrichtung des Antriebsmotors kann gestört werden, so dass die Vorgabewerte von der Bedieneinrichtung zur Ansteuereinrichtung nicht mehr korrekt übertragen werden können.

Es ist daher die Aufgabe der vorliegenden Erfindung, eine zuverlässige Übertragung von Vorgabewerten zwischen einer Bedieneinrichtung und einer Ansteuereinrichtung für einen Antriebsmotor eines elektrischen Hand-Werkzeuges bereitzustellen.

Zu Lösung der Aufgabe ist ein elektrisches Hand-Werkzeug gemäß der technischen Lehre des Anspruchs 1 vorgesehen.

Das Hand-Werkzeug ist vorteilhaft eine Oberflächen-Bearbeitungsmaschine, z.B. eine Schleif- oder Poliermaschine. Das Werkzeug ist z.B. eine Schleif- oder Polierscheibe. Mit der von der Bedieneinheit beabstandeten und durch eine Verlängerungsbaueinheit verbundenen Antriebsbaueinheit können z.B. bequem Böden, Wände oder Decken bearbeitet werden.

Die Bedieneinrichtung kann beispielsweise eine Art Griffelektronik bilden, die in einem Bedieneinrichtungsgehäuse angeordnet ist. Der Antriebsmotor mit seiner Ansteuereinrichtung bildet eine davon abgesetzte, separate Antriebsbaueinheit.

Die Ansteuereinrichtung und der Antriebsmotor können eine einzige Baueinheit bilden. Die Auswertemittel können z.B. in einem Auswertemodul oder in der Ansteuereinrichtung enthalten sein. Die Ansteuereinrichtung kann z.B. eine elektronische Kommutiereinheit eines elektronisch kommutierten Antriebsmotors oder eine Phasenanschnittssteuerung umfassen. Die Ansteuereinrichtung kann den Antriebsmotor lediglich ansteuern, d.h. die Antriebsspannung ohne eine Rückkoppelung aktueller Istwerte einstellen. Ferner kann die Ansteuereinrichtung vorteilhaft eine Regelung umfassen oder bilden. Die Regelung regelt den Antriebsmotor anhand der Vorgabewerte, die dann

Sollwerte bilden, sowie anhand von Istwerten des Antriebsmotors, z.B. aktuellen Drehzahlwerten.

Zwischen der Bedieneinheit und der Antriebsbaueinheit sind für die Übertragung von Vorgabedaten an die Ansteuereinrichtung außer den elektrischen Energieversorgungsleitungen keine weiteren elektrischen Leitungen erforderlich, insbesondere keine Signalleitungen. Die Vorgabedaten werden ausschließlich über die Energieversorgungsspannung übertragen. Die Energieversorgungsleitungen verlaufen beispielsweise an oder in einem Verlängerungsstab zwischen der Bedieneinheit und der Antriebsbaueinheit.

Mit der elektrischen Energieversorgung zwischen der Bedieneinrichtung und der Antriebsbaueinheit ist zugleich eine elektrische Signalverbindung hergestellt, über die die Bedieneinrichtung die Vorgabewerte an die Ansteuereinrichtung überträgt. Die Vorgabedaten werden über die Energieversorgungsspannung zu der Ansteuereinrichtung übermittelt. Somit bildet die Bedieneinrichtung sozusagen eine Fernsteuereinrichtung für die Ansteuereinrichtung beziehungsweise den Antriebsmotor. Die Ansteuereinrichtung erhält die Energieversorgungsspannung sowie die Vorgabedaten und bereitet die Energieversorgungsspannung anhand der Vorgabedaten für den Antriebsmotor auf. Die Ansteuereinrichtung enthält beispielsweise leistungselektronische Komponenten, um die Energieversorgungsspannung aufzubereiten. Somit geschieht die Aufbereitung der Energieversorgung für den Antriebsmotor sozusagen vor Ort. Aufwendige, beim Betrieb eventuell sich erhitzende leistungselektronische Komponenten sind daher bei der Bedieneinrichtung nicht erforderlich. Lediglich für die Beeinflussung der Energieversorgungsspannung zur Übertragung der Vorgabedaten sind elektrische Bauelemente erforderlich. Zweckmäßig ist z.B. eine Absaugung von Staub auf Seiten der Antriebsbaueinheit. Die Bedien-Baueinheit hat vorteilhaft einen Anschluss für eine Absaugeinrichtung, z.B. einen Staubsauger. Dann verlaufen die Energieversorgungsleitungen vorteilhaft an einer Rohrleitung zwischen der Bedien- und der Antriebsbaueinheit, die ganz oder abschnittsweise flexibel sein kann. Die Energieversorgungsleitungen können beispielsweise in einem Luftschlauch oder außenseitig an einem flexiblen Luftschlauch oder einer teilweise starren Rohrleitung angeordnet sein. An der Antriebsbaueinheit und der Bedieneinheit sind zweckmäßigerweise Mehrkomponenten-Anschlüsse vorhanden, an die einerseits der Luftkanal und andererseits die Energieversorgungsleitungen angeschlossen werden können.

Obwohl die Energieversorgungsspannung durch die Vorgabedaten verändert wird, hat sie dennoch einen zur Speisung des Antriebsmotors geeigneten mittleren Spannungspegel. Beispielsweise ist die Energieversorgungsspannung eine Wechselspannung.

Übliche Datenverarbeitungstechniken, wie beispielsweise Schieberegister, Parity-Check oder sonstige Mittel, zur Erhöhung der Übertragungssicherheit beziehungsweise zur Überprüfung der Datenübertragung, zum Beispiel auch Prüfsummentests, CRC (Cyclic Redundancy Check) oder dergleichen, sind ohne weiteres möglich.

Nun wäre es zwar prinzipiell möglich, die Vorgabedaten beispielsweise durch Aufmodulieren von Datensignalen auf die Energieversorgungsspannung von der Bedieneinrichtung zu der Ansteuereinrichtung zu übertragen, z.B. durch ein Übertragungsverfahren mit höherer Frequenz als die Energieversorgungsspannung oder einer dieser zu Grunde liegenden Netzspannung. Die Datenübertragungsmittel enthalten dann einen Modulator, die antriebsseitigen Auswertemittel einen Demodulator.

Erfindungsgemäß sind bei dem Hand-Werkzeug jedoch Takt-Schaltmittel vorhanden, mit denen die Energieversorgungsspannung getaktet verändert wird. Eine Vorgabe-Taktfolge repräsentiert dann die Vorgabedaten.

Erfindungsgemäß sind die Takt-Schaltmittel zum getakteten Ein- und Ausschalten der Energieversorgungsspannung ausgestaltet.

Die Hand-Werkzeugmaschine ist gegenüber Störungen ausgesprochen immun. Auch wenn mehrere, ähnlich aufgebaute Hand-Werkzeugmaschinen am selben Netz betrieben werden und sich an sich gegenseitig stören könnten, wirkt sich dies bei den vorteilhaft taktenden Takt-Schaltmitteln der Bedieneinrichtung nicht oder nur unwesentlich aus.

Die Energieversorgungsspannung kann zwar prinzipiell eine Gleichspannung sein, die beispielsweise durch die Taktsignale unterbrochen wird. Zweckmäßigerweise ist die Energieversorgungsspannung jedoch wellenförmig, beispielsweise eine übliche Wechselspannung. Die Versorgungsspannung ist beispielsweise sinusförmig. Die Takt-Schaltmittel enthalten eine Phasenanschnittsschaltung zu einem Phasenanschnitt der Energieversorgungsspannung. Beispielsweise schalten die Takt-Schaltmittel jeweils einen Anfang oder ein Ende einer jeweiligen Halbwelle der Energieversorgungsspannung. Aber auch ein

An- und Abschalten beziehungsweise ein Reduzieren der Spannungshöhe im mittleren Bereich einer Halbwelle ist ohne weiteres möglich. Somit führt die Phasenanschnittsschaltung sozusagen eine Phasenmodulation durch.

Die Ansteuereinrichtung hat zweckmäßigerweise eine Ansteuer-Phasenanschnittsschaltung zur Erzeugung der Antriebsspannung aus der Energieversorgungsspannung anhand der Vorgabedaten. Die Ansteuer-Phasenanschnittsschaltung und die Phasenanschnittsschaltung der Takt-Schaltmittel zur Erzeugung der Vorgabedaten schneiden eine Halbwelle oder Vollwelle der Energieversorgungsspannung vorzugsweise am selben Abschnitt an, beispielsweise jeweils am Anfang. Somit kann es sein, dass beispielsweise der Phasenanschnitt, den die antriebsmotorseitige Ansteuer-Phasenanschnittsschaltung erzeugt, einen gleichen oder größeren Phasenanschnitt erzeugt, als ohnehin schon durch die Phasenanschnittsschaltung der Bedieneinrichtung erzeugt wird. Die effektive Spannungsversorgung des Antriebsmotors wird dann nicht durch die Übertragung der Vorgabedaten beeinträchtigt.

Auch die nachfolgend dargestellten Maßnahmen tragen dazu bei, dass die erfindungsgemäße Datenübertragung die effektive Energieversorgung des Antriebsmotors nicht oder nur geringfügig beeinträchtigt:
Beispielsweise ist es vorteilhaft, wenn die Datenübertragungsmittel jeweils eine einzige Halbwelle einer Vollwelle zur Übertragung der Vorgabedaten nutzen. So wird beispielsweise nur eine einzige Spannungshalbwelle angeschnitten.

Auf Seiten der Ansteuereinrichtung ist es vorteilhaft, wenn die Auswertemittel eine Bipolar-Auswerteschaltung aufweisen, die sowohl die positiven als auch negativen Halbwellen der Energieversorgungsspannung auswerten können, um darin enthaltene Vorgabedaten auszulesen. Wenn nun, z.B. wie vorher vorgeschlagen, nur eine Halbwelle, beispielsweise die positive oder negative Halbwelle, der Energieversorgungsspannung zur Datenübertragung genutzt wird, kommt es nicht auf die Polarität bei der Auswertung an. Insbesondere dann, wenn die Energieversorgungsleitungen Steckverbindungen enthalten, muss auf die Polarität nicht geachtet werden. Eine entsprechende Steckercodierung ist nicht notwendig. Die Auswertemittel enthalten beispielsweise jeweils eine der positiven und der negativen Halbwelle zugeordnete erste und zweite Messeinrichtung, beispielsweise Spannungskomparator-Schaltungen, sowie einen Auswerter, zum Beispiel eine Logikschaltung, zur Auswertung der Ausgangssignale der beiden ersten und zweiten Messeinrichtungen.

Mit Hilfe der Bipolar-Auswerteschaltung ist es auch möglich, dass die Takt-Schaltmittel der Bedieneinrichtung beide Halbwellen einer Spannungsvollwelle zur Datenübertragung nutzen. Prinzipiell reicht es aber auch ohne weiteres aus, nur eine jeweilige Halbwelle zur Datenübertragung zu nutzen. Bei einer üblichen Netzfrequenz von beispielsweise 50 bis 60 Hz entsteht dann eine Übertragungsgeschwindigkeit von 50 bis 60 Baud, was für die an sich geringen Mengen der Vorgabedaten ausreichend ist.

Die Takt-Schaltmittel sind erfindungsgemäß zum Erzeugen der mindestens einen Vorgabe-Datenfolge bei einem Betriebsstart und/oder bei einer Veränderung der Vorgabewerte ausgestaltet. Wenn die Maschine eingeschaltet wird, beispielsweise eine Netzspannung das erste Mal angelegt wird, übertragen die Datenübertragungsmittel zum ersten Mal die Vorgabe-Datenfolge. Dann erfolgt die Datenübertragung zweckmäßigerweise nur noch, wenn der Bediener an der Vorgabeeinrichtung neue Vorgabewerte angibt, zum Beispiel eine neue Drehzahl vorgibt. Dies hat den Vorteil, dass beispielsweise bei der Phasenanschnittsschaltung nur wenige Halbwellen zur Übertragung der veränderten oder neuen Vorgabedaten erforderlich sind. Ansonsten wird die elektrische Energieversorgungsspannung unverändert von der Bedien-Baueinheit zu der Antriebsbaueinheit übertragen und steht dort in voller Höhe zur Erzeugung der Antriebsspannung zur Verfügung.

Eine weitere Verringerung der Häufigkeit der Datenübertragung wird dadurch erzielt, dass nur bei Über- oder Unterschreiten von Veränderungsschwellwerten der Vorgabewerte die mindestens eine Vorgabedaten-Taktfolge erzeugt wird. Wenn der Bediener also nur eine ganz geringfügige Veränderung beispielsweise eines Drehzahlwerts vorgibt, führt dies - wenn der Veränderungsschwellwert nicht über- oder unterschritten wird - nicht zur Übertragung von Vorgabedaten, sodass die Energieversorgungsspannung in voller Höhe für den Antriebsmotor zur Verfügung steht.

Die Takt-Schaltmittel erzeugen zweckmäßigerweise mindestens eine Synchronisierungs-Taktfolge. Dies kann beispielsweise bei einem Betriebsstart (z.B. erstmaliges Einschalten einer Netzspannung) und/oder als eine vorausgehende Taktfolge vor einer jeweiligen Vorgabedaten-Taktfolge geschehen. Im einfachsten Fall ist die Synchronisierungs-Taktfolge nur ein einziges Synchronisierungs-Bit. Anhand einer charakteristischen Taktfolge, beispielsweise mehrmals logisch 1 oder wechselnd logisch 1 und Null, wird jedoch die Störsicherheit signifikant erhöht.

Die Takt-Schaltmittel erzeugen eine Initialisierungs-Taktfolge zweckmäßigerweise bei einem Betriebsstart. Diese Initialisierungs-Taktfolge kann der Synchronisierungs-Taktfolge entsprechen. Die Initialisierungs-Taktfolge - oder die vorgenannte Synchronisierungs-Taktfolge - enthält zweckmäßigerweise Kennwertdaten der Bedieneinrichtung und/oder der Antriebsbaueinheit. Beispielsweise kann die Initialisierungs-Taktfolge Identitätsdaten oder eine Identitätscodierung der jeweiligen Baueinheit enthalten. So kann sich beispielsweise die Bedieneinrichtung als eine für einen Betrieb von 110 Volt geeignete Bedieneinrichtung bei der Antriebsmotor-Baueinheit sozusagen anmelden. Wenn diese dann für einen Betrieb von 220 Volt ausgelegt ist, schaltet die Ansteuereinrichtung beispielsweise den Antriebsmotor ab oder wandelt anhand der Identitätsdaten eine Betriebsspannung in eine solche, die für den Antriebsmotor geeignet ist. Dies kann beispielsweise bei einer elektronischen Kommutierung vorteilhaft sein.

Die Ansteuereinrichtung ist zweckmäßigerweise zur Einstellung der Antriebsspannung auf einen vorbestimmten Wert ausgestaltet, wenn sie innerhalb mindestens eines zeitlichen Kriteriums keine Vorgabedaten oder nur fehlerhafte Vorgabedaten empfängt. Wenn beispielsweise die Datenübertragung zwischen Bedieneinrichtung und Antriebsbaueinheit gestört ist, stellt die Ansteuereinrichtung die Antriebsspannung auf einen Maximalwert oder einen sonstigen Spannungswert ein, sodass die Antriebsbaueinheit sozusagen im Notlauf arbeitet. Der Bediener kann dann zumindest für eine vorbestimmte Zeit weiter mit dem Hand-Werkzeug arbeiten.

Zweckmäßigerweise hat die Bedieneinrichtung einen Überbrückungsschalter zum Überbrücken der Datenübertragungsmittel. So kann beispielsweise während Betriebsphasen ohne Datenübertragung eine Überbrückung der Datenübertragungsmittel hergestellt werden. Wenn die Datenübertragungsmittel beispielsweise Halbleiter, insbesondere Leistungshalbleiter, enthalten, werden diese durch die Überbrückungsmittel oder den Überbrückungsschalter überbrückt, sodass dort kein Leistungsverlust eintritt.

Ein elektronischer Schalter der Datenübertragungsmittel ist zweckmäßigerweise ein Schalter, der die Energieversorgungsspannung unabhängig von einem tatsächlichen Stromfluss beeinflussen, z.B. ein- und ausschalten, kann, so dass die Vorgabedaten auch dann übertragen werden, der Antriebsmotor keinen Strom benötigt. Der Schalter ist z.B. ein Transistor, insbesondere ein Feldeffekt-Transistor. Mit z.B. einem Triac oder Thyristor wäre ein Schalten ohne Stromfluss nicht möglich.

Die Bedieneinrichtung hat zweckmäßigerweise einen Handgriffbereich zum manuellen Ergreifen. Der Handgriffbereich - es können auch mehrere Handgriffbereiche vorgesehen sein - dient zum Ergreifen des Bedieneinrichtungsgehäuses, um das Hand-Werkzeug zu bedienen.

An der Bedien-Baueinheit sind zweckmäßigerweise elektrische Versorgungsanschlüsse zur elektrischen Stromversorgung des Hand-Werkzeugs vorgesehen. Es versteht sich, dass dort auch beispielsweise ein elektrischer Energiespeicher, insbesondere ein Akkumulator oder eine Batterie, vorzugsweise ein wiederaufladbarer Energiespeicher, angeordnet sein kann.

Bei dem Hand-Werkzeug sind Anzeigemittel, die den Betriebszustand signalisieren, vorteilhaft. Beispielsweise können an der Antriebsbaueinheit Anzeigemittel vorgesehen sein, die eine Störung der Datenübertragung der Vorgabedaten signalisieren.

Ferner kann beispielsweise eine für eine falsche Versorgungsspannung ausgelegte Bedieneinrichtung angeschlossen sein, was die Antriebsbaueinheit anhand der Initialisierungsdaten oder der Synchronisierungsdaten erkennt. In einem solchen Fall schaltet die Ansteuereinrichtung die Antriebsbaueinheit ab und signalisiert dies vorteilhaft an den Anzeigemitteln.

Ferner sind Sicherheitseinrichtungen vorteilhaft, beispielsweise eine Abschalteinrichtung, die die Energieversorgungsspannung in sicherheitskritischen Situationen abschaltet. Dies kann beispielsweise dann der Fall sein, wenn Anschlusskontakte für die elektrischen Energieversorgungsleitungen der Bedien-Baueinheit frei liegen, was zur Verletzung des Bedieners führen könnte. Auch ein Wiederanlauf des Hand-Werkzeuges wird durch die Bedieneinrichtung zweckmäßigerweise verhindert, falls die Maschine bereits eingeschaltet ist.

Nachfolgend wird ein Ausführungsbeispiel der Erfindung anhand der Zeichnung erläutert. Es zeigen:

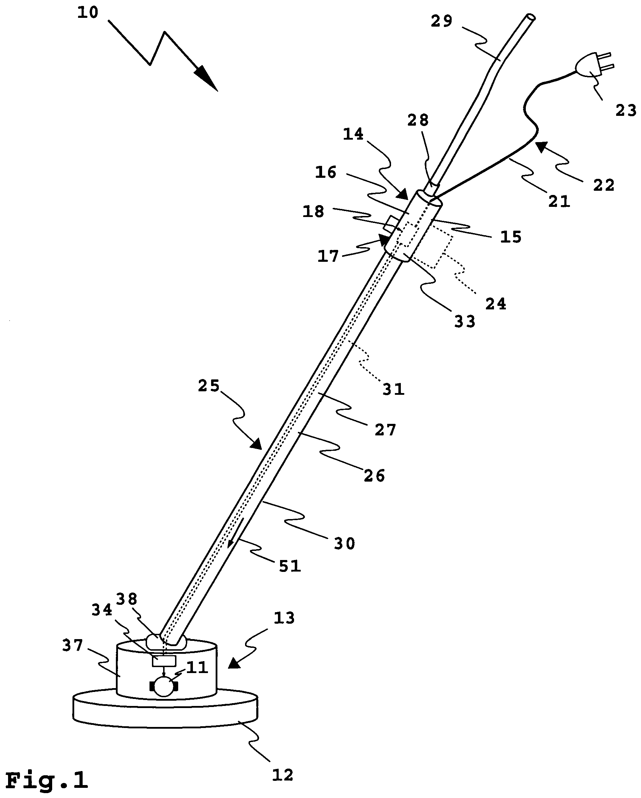

- Figur 1: eine Seitenansicht eines erfindungsgemäßen Hand-Werkzeugs,

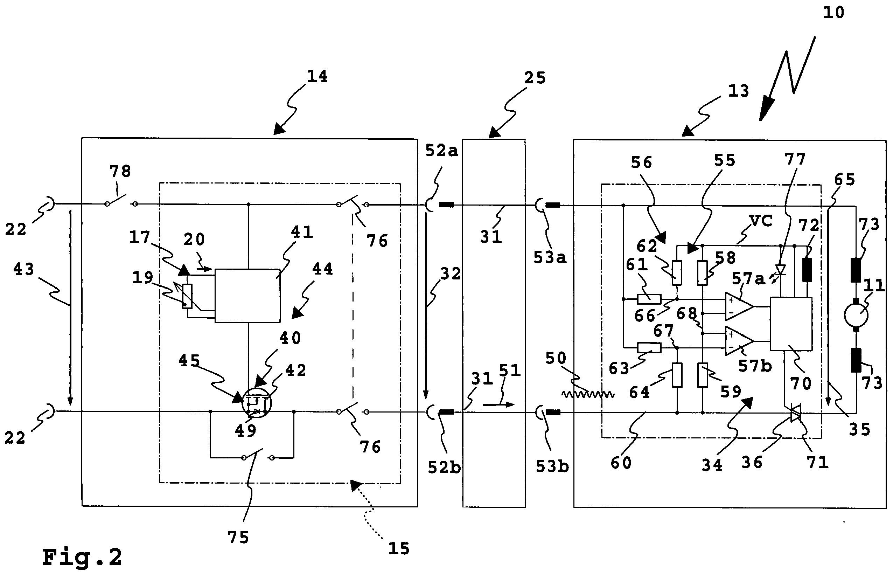

- Figur 2: ein elektrisches Schaltbild des Hand-Werkzeugs gemäß Figur 1,
- Figur 3: einen Verlauf einer von einer Bedieneinrichtung des Hand-Werkzeugs zu einer Antriebsbaueinheit des Hand-Werkzeugs übertragenen Energieversorgungsspannung sowie einer Antriebsspannung der Antriebsbaueinheit,
- Figur 4: eine Synchronisierungs- beziehungsweise Initialisierungs-Taktfolge, die anhand der Energieversorgungsspannung übertragen wird, und
- Figur 5: Varianten zur Phasenmodulation der Energieversorgungsspannung.

Bei einem Hand-Werkzeug 10 ist ein Antriebsmotor 11 zum Antreiben eines Werkzeugs 12, beispielsweise einer Schleifscheibe, in einer Antriebsbaueinheit 13 angeordnet. Die Bedienung der Antriebsbaueinheit 13 geschieht davon entfernt an einer Bedien-Baueinheit 14 einer Bedieneinrichtung 15. An einem Bedieneinrichtungsgehäuse 16 ist eine Vorgabeeinrichtung 17 angeordnet, die beispielsweise ein mittels einer Druck- oder Schiebehandhabe 18 betätigbares Potentiometer 19 enthält. Mit der Vorgabeeinrichtung 17 sind Vorgabewerte 20, beispielsweise Drehzahlwerte, Drehmomentwerte oder dergleichen, für die Antriebsbaueinheit 13 vorgebbar.

Ferner ist die Bedien-Baueinheit 14 zur elektrischen Stromversorgung des Hand-Werkzeugs 10 vorgesehen. Ein Netzkabel 21 bildet einen elektrischen Versorgungsanschluss 22 für das Hand-Werkzeug 10. Das Netzkabel 21 hat einen Stecker 23 zum Einstecken in eine Steckdose. Alternativ oder ergänzend wäre es bei jeder erfindungsgemäßen Maschine auch möglich, einen elektrischen Energiespeicher 24 an der Bedieneinrichtung 15 vorzusehen, beispielsweise einen Akku-Pack. Der Energiespeicher 24 ist zweckmäßigerweise auswechselbar.

Zwischen der Antriebsbaueinheit 13 und der Bedien-Baueinheit 14 erstreckt sich eine Verlängerungsbaueinheit 25. Die Verlängerungsbaueinheit 25 enthält eine Rohrleitung 26 mit einem Luftkanal 27 zum Führen von Abluft von der Antriebsbaueinheit 13 zu der Bedien-Baueinheit 14. Die Bedien-Baueinheit 14 hat zweckmäßigerweise einen Anschluss 28 zum Anschluss einer Schlauchleitung 29, die beispielsweise zu einem Staubsauger oder zu einer sonstigen Absaugeinrichtung führt. Über die Rohrleitung 26 kann beispielsweise staubbeladene Abluft von der Antriebsbaueinheit 13 abgesaugt werden.

An einem Antriebsgehäuse 37 der Antriebsbaueinheit 13 ist vorzugsweise ein Drehgelenk, insbesondere ein kardanisches Gelenk, zum Anschluss der Verlängerungsbaueinheit 25, angeordnet.

Die Verlängerungsbaueinheit 25 bildet eine Mehrkomponenten-Verbindungseinrichtung 30, die lösbar mit der Antriebsbaueinheit 13 und der Bedien-Baueinheit 14 mittels Steckverbindungen verbindbar ist. Neben dem Luftkanal 27 sind Energieversorgungsleitungen 31 zwischen den beiden Baueinheiten 13, 14 angeordnet. Somit kann die Bedien-Baueinheit 14 die Antriebsbaueinheit 13 mit einer Energieversorgungsspannung 32 versorgen.

Nun wäre es prinzipiell möglich, dass bereits bei der Bedien-Baueinheit 14 die Energieversorgungsspannung 32 so aufbereitet wird, dass der Antriebsmotor 11 im gewünschten Betriebsmodus läuft, beispielsweise eine vorbestimmte Drehzahl hat. Dazu wäre es beispielsweise denkbar, bei der Bedieneinrichtung 15 eine entsprechende Leistungselektronik, beispielsweise eine Phasenanschnittssteuerung oder dergleichen, vorzusehen. Dies hätte allerdings den Nachteil, dass die Bedien-Baueinheit 14 beispielsweise zu kühlen wäre. Ein Handgriffbereich 33 an dem Bedieneinrichtungsgehäuse 16 zum Ergreifen des Hand-Werkzeugs 10 würde dadurch heiß werden, was die Bedienung des Hand-Werkzeugs 10 beispielsweise unkomfortabel macht. Daher ist bei dem Hand-Werkzeug 10 ein anderes Konzept gewählt:
Die Antriebsbaueinheit 13 enthält eine Ansteuereinrichtung 34 zur Ansteuerung des Antriebsmotors 11. Die Ansteuereinrichtung 34 erzeugt anhand der Energieversorgungsspannung 32, die über die Energieversorgungsleitungen 31 übertragen wird, eine Antriebsspannung 35 für den Antriebsmotor 11. Die Ansteuereinrichtung 34 enthält beispielsweise eine Ansteuer-Phasenanschnittsschaltung 36, die im Wesentlichen sinusförmig verlaufende, der Netzspannung im Wesentlichen entsprechende Energieversorgungsspannung 32 anschneidet, insbesondere zum Beginn einer jeweiligen Halbwelle, und so die Effektivspannung zum Betreiben des Antriebsmotors 11 beeinflusst. Auf diesem Wege lässt sich die Drehzahl des Antriebsmotors 11 verändern.

Die Bedieneinrichtung 15, die man auch als Griffelektronik bezeichnen kann, enthält Datenübertragungsmittel 40 zur Übertragung der Vorgabewerte 20 an die Antriebsbaueinheit 13. Die Bedieneinrichtung 15 enthält beispielsweise eine Steuerung 41, zum Beispiel eine Mikroprozessorschaltung, zur Übertragung der an dem Potentiometer 19 eingestellten Vorgabewerte 20. Die Steuerung 41 steuert die Bedieneinrichtung 15. Beispielsweise steuert die Steuerung 41 einen elektronischen Schalter 42, zum Beispiel einen MOSFET-Transistor oder einen sonstigen Transistor, zur Beeinflussung einer Versorgungsspannung 43, die am Versorgungsanschluss 22 bereitsteht. Die Versorgungsspannung 43 kann mit einem Netzschalter beziehungsweise Ein-/Ausschalter 78 an der Bedien-Baueinheit 14 ein- und ausgeschaltet werden. Der Schalter 42 sowie die Steuerung 41 bilden Bestandteile von Takt-Schaltmitteln 44 zum getakteten Ein- und Ausschalten, insbesondere zu einem getakteten Phasenanschnitt der Versorgungsspannung 43, um die Energieversorgungsspannung 32 für die Antriebsbaueinheit 13 zu bilden. Mit Hilfe der Takt-Schaltmittel 44 kann eine Phase der Versorgungsspannung 43 getaktet ein- und ausgeschaltet werden. Der elektronische Schalter 42 bildet einen Bestandteil einer Phasenanschnittsschaltung 45, mit der beispielsweise jeweils ein Anfang, ein mittlerer Abschnitt und ein Ende einer negativen Halbwelle 46 einer Vollwelle 47 ein- und ausgeschaltet werden kann.

Der MOSFET-Schalter 42 schaltet beispielsweise Lastströme in seiner Drain-Source-Strecke. Wenn der Drain einen höheren Spannungswert als die Source aufweist, kann der Transistor die sinusförmige Netz-Versorgungsspannung 43 abschneiden. Dies ist beispielsweise am Anfang oder am Ende der negativen Halbwelle 46 der Netz-Versorgungsspannung 43 der Fall. Bei einer positiven Halbwelle 48 hingegen leitet die Diode 49 des MOSFET-Schalters 42. Somit takten die Takt-Schaltmittel 44 vorliegend nur die negative Halbwelle 46, wobei ein Takten beider Halbwellen 46, 48 ohne weiteres denkbar ist.

Die Takt-Schaltmittel 44 erzeugen Vorgabe-Taktfolgen 50, die Vorgabedaten 51 repräsentieren. Die Vorgabedaten 51 sind beispielsweise digitalisierte Vorgabewerte 20, die eine gewünschte Soll-Drehzahl des Antriebsmotors 11 darstellen. Somit enthält die Energieversorgungsspannung 32, die die Bedieneinrichtung 15 an die Antriebsbaueinheit 13 übermittelt, Vorgabedaten 51 zur Einstellung beispielsweise einer gewünschten Drehzahl des Antriebsmotors 11.

Obwohl die Vorgabedaten 51 nur auf den jeweiligen negativen Halbwellen 46 übertragen werden, kommt es auf ein polaritätsrichtiges Verbinden der Bedien-Baueinheit 14 mit der Verlängerungsbaueinheit 25 sowie der Antriebsbaueinheit 13 nicht an. Somit ist es nicht wesentlich, mit welcher Polarität Verbindungskontakte 52a, 52b zwischen der Bedien-Baueinheit 14 und der Verlängerungsbaueinheit 25 sowie Verbindungskontakte 53a, 53b zwischen der Verlängerungsbaueinheit 25 und der Antriebsbaueinheit 13 miteinander verbunden werden, beispielsweise aneinander angelegt oder ineinander eingesteckt werden. Die Verbindungskontakte 52a-53b sind beispielsweise Steck- oder Schleifkontakte. Auswertemittel 55 der Ansteuereinrichtung 34 können nämlich mit ihrer Bipolar-Auswerteschaltung 56 wahlweise eine positive oder eine negative Halbwelle 48, 46 zur Ermittlung der Vorgabedaten 51 auswerten.

Die Bipolar-Auswerteschaltung 56 hat eine der positiven Halbwellen 48 zugeordnete erste Messeinrichtung mit einem Komparator 57a und eine den negativen Halbwellen 46 zugeordnete zweite Messeinrichtung mit einem Komparator 57b. Die Komparatoren 57a, 57b sind beispielsweise Operationsverstärker. Am Minus-Eingang des Komparators 57a sowie am Plus-Eingang des Komparators 57b liegt als Referenzspannung eine halbe Elektronik-Versorgungsspannung VC an. Dies wird durch zwei gleiche Widerstände 58, 59 zwischen der Elektronik-Versorgungsspannung VC und einem in der Zeichnung unteren Potential 60 bewirkt. Die Minus-Eingänge der Komparatoren 57a, 57b sind an weitere Spannungsteiler angeschlossen, die durch Widerstände 61, 62 sowie 63, 64 gebildet sind. Die Widerstände 61, 62, die mit dem oberen Potential 65 verbunden sind, sind wesentlich größer als die weiteren Widerstände 58, 59, 62, 64, die zweckmäßigerweise etwa gleich groß sind.

Die Widerstände 58, 59, 61-64 sind so bemessen, dass zu einem Zeitpunkt, bei dem die Energieversorgungsspannung 32 gleich Null ist, ein Potential an einem Spannungsabgriff 66 zwischen den Widerständen 61, 62 etwa im Bereich der Elektronik-Versorgungsspannung VC liegt, während ein Spannungsabgriff 67 zwischen den Widerständen 63, 64, mit dem der Minus-Eingang des Komparators 57a verbunden ist, relativ nahe an dem Potential GND beziehungsweise Null ist. Am Spannungsabgriff 68 liegt, wie gesagt, etwa die halbe Versorgungsspannung VC als Referenzspannung an. Durch diese Vorspannungsverhältnisse liegen die Ausgänge der beiden Komparatoren 57a, 57b auf logisch 1 beziehungsweise HIGH, wenn die Energieversorgungsspannung 32 eingangsseitig bei Null liegt. Steigt nun die Energieversorgungsspannung 32 an, das heißt, es liegt die positive Halbwelle 48 an, ändern sich die Verhältnisse beim Komparator 57a nicht. Beim Komparator 57b wird jedoch die Eingangsspannung am Spannungsabgriff 67 angehoben, bis der Komparator 57b kippt und an seinem Ausgang das Potential LOW beziehungsweise GND anliegt.

Eine Steuerung 70 bildet oder enthält eine Auswertelogik für die Ausgangspotentiale der beiden Komparatoren 57a, 57b. Die Steuerung 70 enthält beispielsweise einen Mikrocontroller. Die Steuerung 70 ermittelt anhand eines Phasenanschnitts der Halbwellen 46, 48 die Vorgabedaten 51. Beim Ausführungsbeispiel sind jeweils Datenfolgen mit 4 Bit dargestellt, wobei eine 8-Bit-Logik oder eine 16-Bit-Logik zur Erzielung einer höheren Datenauflösung zweckmäßig ist. Dies ermöglicht es auch, an sich vorhandene Bauelemente, beispielsweise Schieberegister und dergleichen, zur Auswertung der Vorgabedaten 51 zu verwenden.

Die Steuerung 70 steuert anhand der Vorgabedaten 51 einen Thyristor 71 der Ansteuer-Phasenanschnittsschaltung 36 an.

Zweckmäßigerweise enthält die Steuerung 70 auch eine Regelung für die Drehzahl des Antriebsmotors 11. Für diese Regelung erhält die Steuerung 70 anhand der Vorgabedaten 51 Sollwerte sowie mit Hilfe einer Tachospule 72 Istwerte. Ferner sind noch Erregerspulen 73 des Antriebsmotors 11 dargestellt.

Zur Entlastung der Datenübertragungsmittel 40, insbesondere des elektronischen Schalters 42, ist ein Überbrückungsschalter 75 vorgesehen, mit dem der Schalter 42 überbrückbar ist. Wenn keine Vorgabedaten 51 zu senden sind, was der Regelfall ist, überbrückt der Überbrückungsschalter 75 den Elektronik-Schalter 42, sodass dieser nicht belastet wird. Eine Kühlung des Schalters 42 ist nicht erforderlich. Der Überbrückungsschalter 75, beispielsweise ein Relais, wird zweckmäßigerweise von der Steuerung 41 angesteuert.

Die Steuerung 41 steuert ferner eine Abschalteinrichtung 76, beispielsweise ein Relais, an, mit dem die Verbindungskontakte 52a, 52b spannungsfrei schaltbar sind. Dies ist beispielsweise dann der Fall, wenn die korrespondierenden Verbindungskontakte 52a, 52b der Verlängerungsbaueinheit 25 nicht gesteckt sind. Des Weiteren ist bei der Steuerung 41 eine Wiederanlaufsperre realisiert, die als eine Einschaltverriegelung einen Anlauf des Hand-Werkzeugs 10 beziehungsweise des Antriebsmotors 11 verhindert, falls diese bereits eingeschaltet sind. Ein unkontrollierter Betrieb des Hand-Werkzeugs 10, der zur Gefährdung eines Bedieners führen könnte, wird dadurch vermieden. Die Abschalteinrichtung 76 arbeitet zweckmäßigerweise zweipolig, sodass in jedem Fall beide Verbindungskontakte 52a, 52b spannungsfrei sind, wenn die Abschalteinrichtung 76 abschaltet.

Anzeigemittel 77, die beispielsweise eine Leuchtdiode enthalten, signalisieren die jeweiligen Betriebszustände des Hand-Werkzeugs 10, insbesondere der Antriebsbaueinheit 13. Wenn die Anzeigemittel 77 ausgeschaltet sind, ist alles in Ordnung. Durch Dauerleuchten oder unterschiedlich schnelles Blinken kann beispielsweise ein Überhitzen des Antriebsmotors 11, ein gestörter Datenempfang oder eine nicht funktionierende Kombination aus Bedien-Baueinheit 14 und Antriebsbaueinheit 13 signalisiert werden, beispielsweise wenn diese für unterschiedliche Spannungspegel ausgelegt sind.

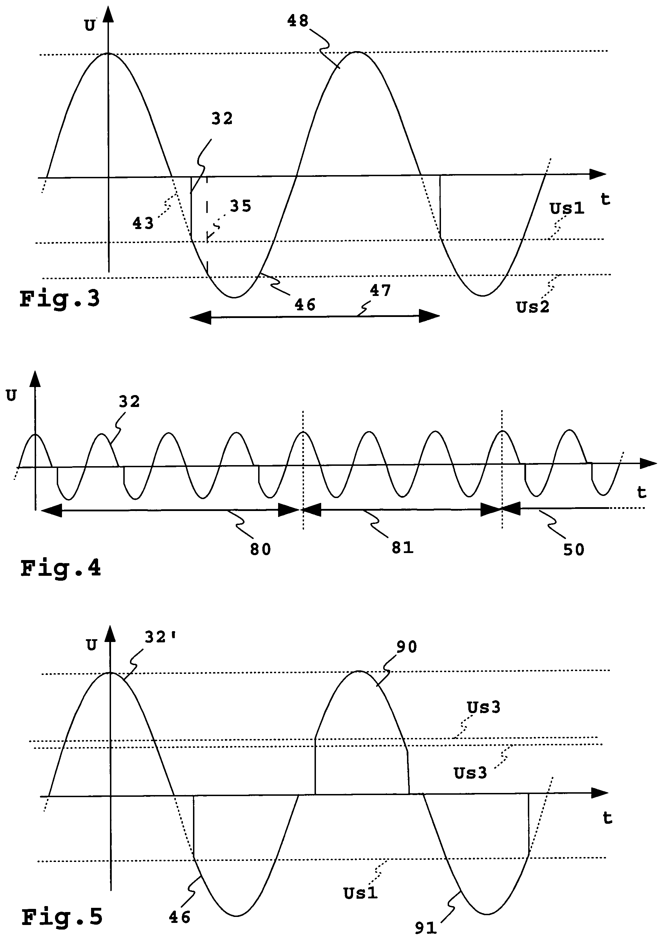

Die Phasenanschnittsschaltungen 36, 45 arbeiten zweckmäßigerweise derart, dass sie jeweils den Anfang einer SpannungsVollwelle 47 anschneiden. Wenn die Datenübertragungs-Phasenanschnittsschaltung 45 jeweils den Anfang einer Spannungswelle zur Datenübertragung nutzt, hat dies den Vorteil, dass der Effektivwert der Energieversorgungsspannung 32 nur wenig beeinflusst wird. Wenn nun beide Phasenanschnittsschaltungen 36, 45 die jeweilige gleiche positive oder negative Halbwelle 46, 48 anschneiden, wie beim Ausführungsbeispiel, hat dies den weiteren Vorteil, dass sich der Phasenanschnitt durch die datenübertragende Phasenanschnittsschaltung 45 kaum auswirkt, weil in der Regel niedrigere Drehzahlen als die Maximaldrehzahl gefahren werden. Die den Antriebsmotor 11 ansteuernde Phasenanschnittsschaltung 36 schneidet die negative Halbwelle 46 beispielsweise noch stärker an, sodass ein Spannungsverlauf gemäß Figur 3 entsteht. Während der Schalter 42 beispielsweise bereits bei einem Schaltpotential Us1 die eingangsseitig anliegende Versorgungsspannung 43 durchschaltet, so dass diese vollständig zur Versorgung des Antriebsmotors 11 zur Verfügung stünde, schaltet die antriebsseitige Phasenanschnittsschaltung 36 die Energieversorgungsspannung 32 erst bei einem negativeren Schaltpotential Us2 durch. Somit wirkt sich beispielsweise bei der in Figur 3 dargestellten Spannungssituation die erfindungsgemäße Datenübertragung über die Energieversorgungsspannung 32 nicht auf die durch den Antriebsmotor 11 erbringbare Effektivleistung aus.

Bei einem Betriebsstart, beispielsweise beim erstmaligen Einschalten der Versorgungsspannung 43, überträgt die Bedieneinrichtung 15 zunächst eine Synchronisierungs-Taktfolge 80, zum Beispiel logisch 1-1-0-1, an die Antriebsbaueinheit 13. Nur wenn die Auswertemittel 55 die Synchronisierungs-Taktfolge 80 korrekt empfangen, schalten diese auf Empfang für weitere Vorgabedaten.

An die Synchronisierungs-Taktfolge 80 schließt sich eine Initialisierungs-Taktfolge 81 an, mit der die Bedieneinrichtung 15 ihre Kenndaten an die Antriebsbaueinheit 13 überträgt, beispielsweise für welches Spannungsniveau sie ausgelegt ist. Wenn die Steuerung 70 anhand der Initialisierungs-Taktfolge 81 beispielsweise erkennt, dass die Bedien-Baueinheit 14 für ein anderes Spannungsniveau, beispielsweise 110 Volt statt 230 Volt oder dergleichen, ausgelegt ist, schaltet sie den Antriebsmotor 11 ab.

An die Initialisierungs-Taktfolge 81 schließt sich die Vorgabedaten-Taktfolge 50 mit den Vorgabedaten 51 an, um beispielsweise eine gewünschte Drehzahl zu übertragen. Die in Figur 4 dargestellte Vorgabe-Taktfolge 50 beginnt beispielsweise mit logisch 1-1 und ist nur teilweise dargestellt. Vorteilhaft sind Taktfolgen mit jeweils z.B. 8 oder 16 Bit.

In Figur 5 ist dargestellt, dass selbstverständlich auch positive Halbwellen zur erfindungsgemäßen kombinierten Energie- und Datenübertragung genutzt werden können. Eine Energieversorgungsspannung 32', die anfangs beispielsweise ähnlich wie die Energieversorgungsspannung 32 verläuft, wobei die erste negative Halbwelle 46 angeschnitten wird und bis zu einem Schaltpotential Us1 Null ist, wird eine positive Halbwelle 90 bis zu einem positiven Schaltpotential Us3 zunächst nicht übertragen, was einer Übertragung von logisch 1 entspricht. Ferner wird auch das Ende der positiven Halbwelle 90 nicht übertragen. Vielmehr wird bereits bei einem Schaltpotential Us4 auf Null geschaltet. Somit ist es möglich, bei der positiven Halbwelle 90 beispielsweise bereits 2 Bit zu übertragen.

Ferner ist es möglich, dass eine negative Halbwelle wie beispielsweise die Halbwelle 91 nicht an ihrem Anfang, sondern an ihrem Ende angeschnitten wird.

## Patentansprüche

1. Elektrisches Hand-Werkzeug (10) mit einem Antriebsmotor (11) zum Antreiben eines Werkzeugs (12), mit einer Ansteuereinrichtung (34) zur elektrischen Ansteuerung des Antriebsmotors (11), mit einer Bedieneinrichtung (15) zur Bedienung des Hand-Werkzeugs (10), und mit einer an der Bedieneinrichtung (15) angeordneten, durch einen Bediener betätigbaren Vorgabeeinrichtung (17) zur Erzeugung von Vorgabewerten (20) für die Ansteuereinrichtung (34), die den Antriebsmotor (11) anhand der Vorgabewerte (20) elektrisch ansteuert, wobei die Bedieneinrichtung (15) eine Bedien-Baueinheit (14) bildet und ein Bedieneinrichtungsgehäuse (16) aufweist, wobei der Antriebsmotor (11) und die Ansteuereinrichtung (34) eine Antriebsbaueinheit (13) bilden und in einem von dem Bedieneinrichtungsgehäuse (16) separaten Antriebsgehäuse angeordnet sind, wobei sich zwischen der Antriebsbaueinheit (13) und der Bedien-Baueinheit (14) sich eine Verlängerungsbaueinheit (25) erstreckt und zwischen dem Bedieneinrichtungsgehäuse (16) und dem Antriebsgehäuse elektrische Energieversorgungsleitungen (31) zur Bereitstellung einer elektrischen Energieversorgungsspannung (32) für die Antriebsbaueinheit (13) verlaufen, wobei die Bedieneinrichtung (15) elektrische Datenübertragungsmittel (40) zur Übertragung von anhand der Vorgabewerte (20) gebildeten Vorgabedaten (51) an die Ansteuereinrichtung (34) durch Veränderung der Energieversorgungsspannung (32) aufweist, und wobei die Antriebsbaueinheit (13) Auswertemittel (55) zur Auswertung der über die Energieversorgungsspannung (32) übertragenen Vorgabedaten (51) zur Ansteuerung des Antriebsmotors (11) durch Bereitstellen einer anhand der Vorgabedaten (51) aus der Energieversorgungsspannung (32) generierten Antriebsspannung (35) aufweist, wobei die Datenübertragungsmittel (40) Takt-Schaltmittel (44) zum getakteten Verändern der Energieversorgungsspannung (32), nämlich zum getakteten Ein- und Ausschalten der Energieversorgungsspannung (32), aufweist, wobei die Vorgabedaten (51) durch mindestens eine Vorgabedaten-Taktfolge (50) repräsentiert sind, und dass die Takt-Schaltmittel (44) zum Erzeugen der mindestens einen Vorgabedaten-Taktfolge (50) bei einem Betriebsstart und/oder bei einer Veränderung der Vorgabewerte (20) ausgestaltet sind.

2. Hand-Werkzeug nach Anspruch 1, **dadurch gekennzeichnet, dass** die Energieversorgungsspannung (32) wellenförmig ist, und dass die Takt-Schaltmittel (44) eine Phasenanschnittsschaltung (45) zu einem Phasenanschnitt der Energieversorgungsspannung (32) aufweisen.

3. Hand-Werkzeug nach einem der Ansprüche 1 oder 2, **dadurch gekennzeichnet, dass** die Ansteuereinrichtung (34) eine Ansteuer-Phasenanschnittsschaltung (36) zur Erzeugung der Antriebsspannung (35) aus der Energieversorgungsspannung (32) anhand der Vorgabedaten (51) aufweist, und dass die Ansteuer-Phasenanschnittsschaltung (36) und die Phasenanschnittsschaltung (45) der Takt-Schaltmittel (44) jeweils am selben Abschnitt, insbesondere am Anfang, einer Spannungswelle (47) anschneiden.

4. Hand-Werkzeug nach einem der vorhergehenden Ansprüche, **dadurch gekennzeichnet, dass** die Datenübertragungsmittel (40) nur jeweils anhand einer Halbwelle (46, 48) einer Vollwelle (47) der Energieversorgungsspannung (32) Daten übertragen.

5. Hand-Werkzeug nach einem der vorhergehenden Ansprüche, **dadurch gekennzeichnet, dass** die Auswertemittel (55) eine Bipolar-Auswerteschaltung (56) zum Auswerten der positiven und der negativen Halbwelle (46, 48) der Energieversorgungsspannung (32) aufweisen.

6. Hand-Werkzeug nach einem der vorhergehenden Ansprüche, **dadurch gekennzeichnet, dass** die Takt-Schaltmittel (44) zum Erzeugen einer Synchronisierungs-Taktfolge bei einem Betriebsstart und/oder als eine der mindestens einen Vorgabedaten-Taktfolge (50) jeweils vorauseilende Taktfolge ausgestaltet sind.

7. Hand-Werkzeug nach einem der vorhergehenden Ansprüche, **dadurch gekennzeichnet, dass** die Takt-Schaltmittel (44) zum Erzeugen einer Initalisierungs-Taktfolge insbesondere bei einem Betriebsstart ausgestaltet sind, wobei die Initialisierungs-Taktfolge Kennwertdaten der Bedieneinrichtung (15) und/oder der Antriebsbaueinheit (13), insbesondere über eine Spannungshöhe und/oder Frequenz der Energieversorgungsspannung (32), enthält.

8. Hand-Werkzeug nach einem der vorhergehenden Ansprüche, **dadurch gekennzeichnet, dass** die Ansteuereinrichtung (34) zur Einstellung der Antriebsspannung (35) auf einen vorbestimmten Wert ausgestaltet ist, wenn sie innerhalb mindestens eines zeitlichen Kriteriums keine Vorgabedaten (51) oder nur fehlerhafte Vorgabedaten (51) empfängt.

9. Hand-Werkzeug nach einem der vorhergehenden Ansprüche, **dadurch gekennzeichnet, dass** die Bedieneinrichtung (15) einen Überbrückungsschalter (75) zum Überbrücken der Datenübertragungsmittel (40) aufweist und/oder einen Hangriffbereich zum manuellen Ergreifen aufweist und/oder eine Abschalteinrichtung (76) zum Abschalten der Energieversorgungsspannung (32) aufweist.

10. Hand-Werkzeug nach einem der vorhergehenden Ansprüche, **dadurch gekennzeichnet, dass** die Bedien-Baueinheit (14) einen elektrischen Versorgungsanschluss (22) und/oder einen elektrischen Energiespeicher (24), insbesondere eine Batterie, aufweist.

11. Hand-Werkzeug nach einem der vorhergehenden Ansprüche, **dadurch gekennzeichnet, dass** die elektrischen Energieversorgungsleitungen (31) einen Bestandteil einer Mehrkomponenten-Verbindungseinrichtung (30) bilden, die einen Luftkanal (27) zum Führen von Luft zwischen der Bedien-Baueinheit (14) und der Antriebsbaueinheit (13) enthält, wobei die Mehrkomponenten-Verbindungseinrichtung (30) zweckmäßigerweise eine zumindest abschnittsweise feste oder zumindest abschnittsweise flexible Rohrleitung (26) umfasst.

12. Hand-Werkzeug nach einem der vorhergehenden Ansprüche, **dadurch gekennzeichnet, dass** sie insbesondere an der Antriebsbaueinheit (13) angeordnete Anzeigemittel (77) für mindestens einen Betriebszustand aufweist.

13. Hand-Werkzeug nach einem der vorhergehenden Ansprüche, **dadurch gekennzeichnet, dass** die Energieversorgungsspannung (32) einen zur Speisung des Antriebsmotors (11) geeigneten mittleren Spannungspegel aufweist.

14. Hand-Werkzeug nach einem der vorhergehenden Ansprüche, **dadurch gekennzeichnet, dass** die Antriebsbaueinheit (13) und die Bedien-Baueinheit (14) Verbindungskontakte (52a, 52b, 53a, 53b) zum Anschluss der elektrischen Energieversorgungsleitungen (31) aufweisen und/oder dass zwischen dem Bedieneinrichtungsgehäuse (16) und dem Antriebsgehäuse als elektrische Verbindungen ausschließlich die elektrischen Energieversorgungsleitungen (31) verlaufen.

## Claims

1. Electrical hand-operated power tool (10) with a drive motor (11) for driving a tool (12), with a control device (34) for electrical control of the drive motor (11), with an operating device (15) for operation of the hand-operated power tool (10), and with a presetting device (17) mounted on the operating device (15) and actuable by an operator to generate preset values (20) for the control device (34) which controls the drive motor (11) with the aid of the preset values (20), wherein the operating device (15) forms an operating unit (14) and has an operating device housing (16), wherein the drive motor (11) and the control device (34) form a drive unit (13) and are located in a drive housing separate from the operating device housing (16), wherein an extension unit (25) extends between the drive unit (13) and the operating unit (14), and electrical power supply lines (31) to provide an electrical power supply voltage (32) for the drive unit (13) run between the operating device housing (16) and the drive housing, wherein the operating device (15) has electrical data transmission means (40) for the transmission to the control device (34) of preset data (51) formed with the aid of the preset values (20), by changing the power supply voltage (32), and wherein the drive unit (13) has evaluation means (55) for evaluating the preset data (51) transmitted over the power supply voltage (32) for control of the drive motor (11) by provision of a drive voltage (35) generated from the power supply voltage (32) with the aid of the preset data (51), wherein the data transmission means (40) have clock switching means (44) for clocked changing of the power supply voltage (32), namely for clocked switching on and off of the power supply voltage (32), wherein the preset data (51) are represented by at least one preset data clock rate (50), and that the clock switching means (44) are designed to generate the preset data clock rate or rates (50) at start of operation and/or if there is a change in the preset values (20).

2. Hand-operated power tool according to claim 1, **characterised in that** the power supply voltage (32) is wavelike, and that the clock switching means (44) have a phase-angle control circuit (45) for phase-angle control of the power supply voltage (32).

3. Hand-operated power tool according to any of claims 1 or 2, **characterised in that** the control device (34) has a drive phase-angle control circuit (36) for generation of the drive voltage (35) from the power supply voltage (32) with the aid of the preset data (51), and that the drive phase-angle control circuit (36) and the phase-angle control circuit (45) of the clock switching means (44) control in each case on the same section, in particular at the start of a voltage wave (47).

4. Hand-operated power tool according to any of the preceding claims, **characterised in that** the data transmission means (40) transmit data in each case only with the aid of a half wave (46, 48) of a full wave (47) of the power supply voltage (32).

5. Hand-operated power tool according to any of the preceding claims, **characterised in that** the evaluation means (55) have a bipolar evaluation circuit (56) for evaluating the positive and negative half wave (46, 48) of the power supply voltage (32).

6. Hand-operated power tool according to any of the preceding claims, **characterised in that** the clock switching means (44) are designed to generate a synchronisation clock rate at start of operation and/or a clock rate anticipating the respective preset data clock rate (50).

7. Hand-operated power tool according to any of the preceding claims, **characterised in that** the clock switching means (44) are designed to generate an initialising clock rate in particular at start of operation, wherein the initialising clock rate contains characteristic value data for the operating device (15) and/or the drive unit (13), in particular over level of voltage and/or frequency of the power supply voltage (32).

8. Hand-operated power tool according to any of the preceding claims, **characterised in that** the control device (34) is designed for setting the drive voltage (35) at a predetermined value if it receives no preset data (51) or only defective preset data (51) within at least one time criterion.

9. Hand-operated power tool according to any of the preceding claims, **characterised in that** the operating device (15) has a bypass switch (75) to bypass the data transmission means (40) and/or a hand grip area for manual gripping and/or a cut-off device (76) for switching off the power supply voltage (32).

10. Hand-operated power tool according to any of the preceding claims, **characterised in that** the operating unit (14) has an electrical supply connection (22) and/or an electrical energy store (24), in particular a battery.

11. Hand-operated power tool according to any of the preceding claims, **characterised in that** the electrical power supply lines (31) form part of a multi-component connection device (30) which includes an air duct (27) for the feeding of air between the operating unit (14) and the drive unit (13), wherein the multi-component connection device (30) includes piping (26) which is rigid at least in sections or flexible at least in sections.

12. Hand-operated power tool according to any of the preceding claims, **characterised in that** it has display means (77) for at least one operating state, located in particular on the drive unit (13).

13. Hand-operated power tool according to any of the preceding claims, **characterised in that** the power supply voltage (32) has an average voltage level suitable for feeding the drive motor (11).

14. Hand-operated power tool according to any of the preceding claims, **characterised in that** the drive unit (13) and the operating unit (14) have connection contacts (52a, 52b, 53a, 53b) for connection of the electrical power supply lines (31) and/or that solely the electrical power supply lines (31) run as electrical connections between the operating device housing (16) and the drive housing.

## Revendications

1. Outil manuel électrique (10) avec un moteur d'entraînement (11) pour l'entraînement d'un outil (12), avec un dispositif de commande (34) pour la commande électrique du moteur d'entraînement (11), avec un dispositif de manipulation (15) pour la manipulation de l'outil manuel (10), et avec un dispositif de prédéfinition (17) agencé au niveau du dispositif de manipulation (15), actionnable par un opérateur pour la génération de valeurs de prédéfinition (20) pour le dispositif de commande (34) qui commande électriquement le moteur d'entraînement (11) au moyen des valeurs de prédéfinition (20), dans lequel le dispositif de manipulation (15) forme une unité structurelle de manipulation (14) et présente un boîtier de dispositif de manipulation (16), dans lequel le moteur d'entraînement (11) et le dispositif de commande (34) forment une unité structurelle d'entraînement (13) et sont agencés dans un boîtier d'entraînement séparé du boîtier de dispositif de manipulation (16), dans lequel une unité structurelle de prolongement (25) s'étend entre l'unité structurelle d'entraînement (13) et l'unité structurelle de manipulation (14) et des câbles d'alimentation en énergie (31) électriques s'étendent entre le boîtier de dispositif de manipulation (16) et le boîtier d'entraînement pour la fourniture d'une tension d'alimentation en énergie (32) électrique pour l'unité structurelle d'entraînement (13), dans lequel le dispositif de manipulation (15) présente des moyens de transmission de données (40) pour la transmission de données de prédéfinition (51) formées au moyen de valeurs de prédéfinition (20) au dispositif de commande (34) par modification de la tension d'alimentation en énergie (32), et dans lequel l'unité structurelle d'entraînement (13) présente des moyens d'évaluation (55) pour l'évaluation des données de prédéfinition (51) transmises par la tension d'alimentation en énergie (32) pour la commande du moteur d'entraînement (11) par fourniture d'une tension d'entraînement (35) générée au moyen des données de prédéfinition (51) à partir de la tension d'alimentation en énergie (32), dans lequel les moyens de transmission de données (40) présentent des moyens de commutation de cadence (44) pour la modification cadencée de la tension d'alimentation en énergie (32), à savoir pour l'activation et la désactivation cadencées de la tension d'alimentation en énergie (32), dans lequel les données de prédéfinition (51) sont représentées par au moins une suite de cadence de données de prédéfinition (50) et que les moyens de commutation de cadence (44) sont configurés pour la génération de l'au moins une suite de cadence de données de prédéfinition (50) pour un démarrage de fonctionnement et/ou pour une modification des valeurs de prédéfinition (20).

2. Outil manuel selon la revendication 1, **caractérisé en ce que** la tension d'alimentation en énergie (32) est ondulée, et que les moyens de commutation de cadence (44) présentent un circuit de coupe de phase (45) pour une coupe de phase de la tension d'alimentation en énergie (32).

3. Outil manuel selon l'une des revendications 1 ou 2, **caractérisé en ce que** le dispositif de commande (34) présente un circuit de coupe de phase de commande (36) pour la génération de la tension d'entraînement (35) à partir de la tension d'alimentation en énergie (32) au moyen des données de prédéfinition (51), et que le circuit de coupe de phase de commande (36) et le circuit de coupe de phase (45) des moyens de commutation de cadence (44) coupent respectivement au niveau de la même section, en particulier au début, d'une onde de tension (47).

4. Outil manuel selon l'une des revendications précédentes, **caractérisé en ce que** les moyens de transmission de données (40) transmettent des données seulement respectivement au moyen d'une demi-onde (46, 48) d'une onde pleine (47) de la tension d'alimentation en énergie (32).

5. Outil manuel selon l'une des revendications précédentes, **caractérisé en ce que** les moyens d'évaluation (55) présentent un circuit d'évaluation bipolaire (56) pour l'évaluation de la demi-onde positive et de la demi-onde négative (46, 48) de la tension d'alimentation en énergie (32).

6. Outil manuel selon l'une des revendications précédentes, **caractérisé en ce que** les moyens de commutation de cadence (44) sont configurés pour la génération d'une suite de cadence de synchronisation pour un démarrage de fonctionnement et/ou en tant qu'une suite de cadence précédant respectivement l'au moins une suite de cadence de données de prédéfinition (50).

7. Outil manuel selon l'une des revendications précédentes, **caractérisé en ce que** les moyens de commutation de cadence (44) sont configurés pour la génération d'une suite de cadence d'initialisation en particulier pour un démarrage de fonctionnement, dans lequel la suite de cadence d'initialisation contient des données de valeur caractéristique du dispositif de manipulation (15) et/ou de l'unité structurelle d'entraînement (13), en particulier sur une hauteur de tension et/ou fréquence de la tension d'alimentation en énergie (32).

8. Outil manuel selon l'une des revendications précédentes, **caractérisé en ce que** le dispositif de commande (34) est configuré pour le réglage de la tension d'entraînement (35) à une valeur prédéterminée lorsqu'il ne reçoit dans au moins un critère temporel aucune donnée de prédéfinition (51) ou seulement des données de prédéfinition (51) incorrectes.

9. Outil manuel selon l'une des revendications précédentes, **caractérisé en ce que** le dispositif de manipulation (15) présente un commutateur de pontage (75) pour le pontage des moyens de transmission de données (40) et/ou une zone de poignée pour la saisie manuelle et/ou un dispositif d'arrêt (76) pour l'arrêt de la tension d'alimentation en énergie (32).

10. Outil manuel selon l'une des revendications précédentes, **caractérisé en ce que** l'unité structurelle de manipulation (14) présente un raccord d'alimentation (22) électrique et/ou un accumulateur d'énergie (24) électrique, en particulier une batterie.

11. Outil manuel selon l'une des revendications précédentes, **caractérisé en ce que** les câbles d'alimentation en énergie (31) électriques forment une partie d'un dispositif de liaison à plusieurs composants (30) qui contient un canal d'air (27) pour le guidage d'air entre l'unité structurelle de manipulation (14) et l'unité structurelle d'entraînement (13), dans lequel le dispositif de liaison à plusieurs composants (30) comporte de manière appropriée une conduite (26) fixe au moins par section ou flexible au moins par section.

12. Outil manuel selon l'une des revendications précédentes, **caractérisé en ce qu'**il présente en particulier des moyens d'affichage (77) agencés au niveau de l'unité structurelle d'entraînement (13) pour au moins un état de fonctionnement.

13. Outil manuel selon l'une des revendications précédentes, **caractérisé en ce que** la tension d'alimentation en énergie (32) présente un niveau de tension médian approprié à l'alimentation du moteur d'entraînement (11).

14. Outil manuel selon l'une des revendications précédentes, **caractérisé en ce que** l'unité structurelle d'entraînement (13) et l'unité structurelle de manipulation (14) présentent des contacts de liaison (52a, 52b, 53a, 53b) pour le raccordement des câbles d'alimentation en énergie (31) électriques et/ou que les câbles d'alimentation en énergie (31) électriques s'étendent exclusivement entre le boîtier de dispositif de manipulation (16) et le boîtier d'entraînement en tant que liaisons électriques.
